# EUROPÄISCHE PATENTSCHRIFT

(11) **EP 3 028 063 B1**
(45) Veröffentlichungstag und Bekanntmachung des Hinweises auf die Patenterteilung: **28.11.2018**
(21) Anmeldenummer: 14744366.7
(22) Anmeldetag: 29.07.2014
(51) Int. Cl.: G01C 25/00, G01S 7/497, G01C 15/00

(54) **VERFAHREN ZUM KALIBRIEREN EINES MESSGERÄTES**
METHOD FOR CALIBRATING A MEASURING DEVICE
PROCÉDÉ POUR CALIBRER UN APPAREIL DE MESURE

(30) Priorität: 30.07.2013 EP 13178525
(43) Veröffentlichungstag der Anmeldung: 08.06.2016
(73) Patentinhaber: Hilti Aktiengesellschaft, 9494 Schaan (LI)
(72) Erfinder: WINTER, Andreas, A-6800 Feldkirch (AT)
(74) Vertreter: Hilti Aktiengesellschaft Corporate Intellectual Property
(86) Internationale Anmeldenummer: PCT/EP2014/066303
(87) Internationale Veröffentlichungsnummer: WO 2015/014852

(56) Entgegenhaltungen:
- EP-A1- 2 348 331
- EP-A1- 2 523 017
- DE-A1-102007 003 586

## Beschreibung

### Technisches Gebiet

Die vorliegende Erfindung betrifft ein Verfahren zum Kalibrieren eines Messgerätes mittels eines Zielobjektes gemäß dem Oberbegriff des Anspruchs 1 sowie ein Messgerät zur Durchführung eines derartigen Verfahrens gemäß dem Oberbegriff des Anspruchs 6.

Unter dem Begriff "Kalibrieren" wird ein Messverfahren definiert, bei dem die Abweichung zwischen einer ersten und zweiten Größe festgestellt und dokumentiert wird. Die ermittelte Abweichung wird bei der anschließenden Benutzung des Messgerätes zur Korrektur berücksichtigt.

### Stand der Technik

Optische Messgeräte umfassen eine oder mehrere Lasermesseinrichtungen, eine Kameraeinrichtung und eine Kontrolleinrichtung, wobei die Lasermesseinrichtungen bspw. als Winkelmesseinrichtung oder Distanzmesseinrichtung ausgebildet sind. Mit Hilfe optischer Messgeräte können Winkel, Entfernungen und Positionen von Zielobjekten bestimmt werden. Unter dem Begriff "Zielobjekt" werden sämtliche Objekte zusammengefasst, die einen auftreffenden Laserstrahl reflektieren, streuen oder reflektieren und streuen.

Beim Vermessen von natürlichen Zielen, wie beispielsweise Ecken oder Kanten von Gebäuden, hängt die Messgenauigkeit der Messgeräte wesentlich davon ab, wie genau die Zielachse der Kameraeinrichtung und die Messachse der Lasermesseinrichtung koaxial angeordnet sind. Die Abweichungen von der Koaxialität der Mess- und Zielachse nehmen zu, je mehr bewegliche Optikkomponenten ein Messgerät aufweist. Kameraeinrichtungen mit Zoomobjektiven besitzen eine hohe optische Auflösung, weisen aber gleichzeitig eine instabile Zielachse auf.

Bekannt ist, die Koaxialität der Mess- und Zielachse eines Messgerätes durch den Bediener zu prüfen und, falls erforderlich, manuell über Justierelemente zu korrigieren. Die manuelle Justierung durch den Bediener ist aufwändig.

Aus DE 10 2007 003 586 A1 ist ein Verfahren zum Kalibrieren eines Messgerätes bekannt. Das Messgerät umfasst eine Lasermesseinrichtung, die einen Laserstrahl entlang einer Messachse aussendet, eine Kameraeinrichtung mit einer Zielachse und eine Kontrolleinrichtung. Das bekannte Verfahren umfasst folgende Schritte:
▪ Aufnehmen eines ersten Bildes eines Zielobjektes bei ausgeschaltetem Laserstrahl mittels der Kameraeinrichtung,
▪ Festlegen eines Bildausschnittes um eine in der Kontrolleinrichtung gespeicherte Position der Zielachse im ersten Bild des Zielobjektes,
▪ Aufnehmen eines zweiten Bildes des Zielobjektes bei eingeschaltetem Laserstrahl mittels der Kameraeinrichtung,
▪ Bestimmen eines Differenzbildes zwischen dem ersten und dem zweiten Bild des Zielobjektes,
▪ Identifizieren eines vom Zielobjekt reflektierten und/oder gestreuten Empfangsstrahles und eines Umgebungsbereiches im Differenzbild des Zielobjektes und
▪ Bestimmen eines Schwerpunktes des Empfangsstrahles und der Schwerpunktkoordinaten.

Nachteilig ist, dass bei dem bekannten Verfahren zum Kalibrieren eines Messgerätes die Eignung des Zielobjektes für die Kalibrierung des Messgerätes nicht überprüft wird und die Kalibrierung des Messgerätes unabhängig von der Eignung des Zielobjektes durchgeführt wird.

### Darstellung der Erfindung

Die Aufgabe der vorliegenden Erfindung besteht in der Entwicklung eines automatischen Verfahrens zum Kalibrieren eines Messgerätes, das ohne Eingriff eines Bedieners durchgeführt werden kann, wobei die Eignung des Zielobjektes für die Kalibrierung des Messgerätes im Rahmen des Verfahrens überprüft werden soll. Außerdem soll ein entsprechendes Messgerät zur Durchführung des Kalibrierverfahrens entwickelt werden.

Diese Aufgabe wird bei dem eingangs genannten Verfahren zum Kalibrieren eines Messgerätes erfindungsgemäß durch die Merkmale des unabhängigen Anspruchs gelöst. Vorteilhafte Weiterbildungen sind in den abhängigen Ansprüchen angegeben.

Erfindungsgemäß umfasst das Verfahren zum Kalibrieren eines Messgerätes, das eine Lasermesseinrichtung, die einen Laserstrahl entlang einer Messachse aussendet, eine Kameraeinrichtung mit einer Zielachse und eine Kontrolleinrichtung aufweist, die folgenden Schritte:
▪ Aufnehmen eines ersten Bildes eines Zielobjektes bei ausgeschaltetem Laserstrahl mittels der Kameraeinrichtung,
▪ Festlegen eines Bildausschnittes um die in der Kontrolleinrichtung gespeicherte Position der Zielachse im ersten Bild des Zielobjektes,
▪ Bestimmen eines ersten Kontrastes zwischen dem dunkelsten Bildbereich des Bildausschnittes und dem hellsten Bildbereich des Bildausschnittes,
▪ Vergleichen des ersten Kontrastes mit einem in der Kontrolleinrichtung gespeicherten ersten Grenzwert,
▪ Aufnehmen eines zweiten Bildes des Zielobjektes bei eingeschaltetem Laserstrahl mittels der Kameraeinrichtung, wenn der erste Kontrast den ersten Grenzwert nicht überschreitet,
▪ Bestimmen eines Differenzbildes zwischen dem ersten und zweiten Bild des Zielobjektes, ▪ Identifizieren eines vom Zielobjekt reflektierten und/oder gestreuten Empfangsstrahles und eines Umgebungsbereiches im Differenzbild des Zielobjektes,
▪ Bestimmen eines zweiten Kontrastes zwischen dem hellsten Bildbereich des Umgebungsbereiches und dem dunkelsten Bildbereich des Empfangsstrahles,
▪ Vergleichen des zweiten Kontrastes mit einem in der Kontrolleinrichtung gespeicherten zweiten Grenzwert,
▪ Bestimmen eines Schwerpunktes des Empfangsstrahles und der Schwerpunktkoordinaten, wenn der zweite Kontrast den zweiten Grenzwert nicht unterschreitet, und
▪ Speichern der Schwerpunktkoordinaten des Empfangsstrahles als neue Position der Zielachse in der Kontrolleinrichtung.

Das erfindungsgemäße Verfahren hat den Vorteil, dass die Kalibrierung des Messgerätes mittels des Zielobjektes nur durchgeführt wird, wenn das Zielobjekt zwei Bewertungskriterien erfüllt. Als erstes Bewertungskriterium wird die Gleichmäßigkeit in der Helligkeit des Zielobjektes anhand des ersten Kontrastes geprüft und als zweites Bewertungskriterium wird der Unterschied in der Helligkeit zwischen dem identifizierten Empfangsstrahl und dem umgebenden Zielobjekt anhand des zweiten Kontrastes geprüft.

Die Auswertung der Bilder des Zielobjektes erfolgt mit Hilfe bekannter Bildverarbeitungs- und Objekterkennungsverfahren. Unter dem Begriff "Objekterkennung" werden Verfahren zum Identifizieren eines bekannten Objektes innerhalb eines Objektraumes mittels optischer, akustischer oder anderer physikalischer Erkennungsverfahren zusammengefasst.

Der Kontrast ist ein Unterscheidungsmerkmal für den Helligkeitsverlauf eines Bildes oder den Helligkeitsunterschied zwischen zwei Bildbereichen. Als physikalische Messgröße für die Helligkeit wird die Lichtstärke, die in Candela gemessen wird, oder eine vergleichbare Messgröße verwendet. Für jeden Pixel des Bildsensors liefert die Kameraeinrichtung einen Pixelwert. Als Bildbereich wird die kleinste Einheit der Bilder des Zielobjektes bezeichnet, die für die Bewertung des Zielobjektes im Rahmen des erfindungsgemäßen Verfahrens herangezogen wird. Der Bildbereich kann ein einzelnes Pixel sein oder mehrere benachbarte Pixel umfassen. Wenn die Bildbereiche jeweils ein Pixel umfassen, werden die Pixelwerte der einzelnen Pixel bei der Berechnung des Kontrastes verglichen; bei Bildbereichen mit mehreren Pixeln werden die Pixelwerte zu einem Messwert gemittelt und die gemittelten Messwerte anschließend verglichen.

Der erste Kontrast ist durch die Differenz aus 1 und dem Verhältnis der Messwerte zwischen dem dunkelsten Bildbereich (minimaler Messwert) und dem hellsten Bildbereich (maximaler Messwert) des Bildausschnittes definiert und wird als Prozentwert angegeben. Um den Messfehler bei der Kalibrierung zu begrenzen, sollte das Zielobjekt eine möglichst gleichmäßige Oberflächenstruktur aufweisen, die sich im Bild des Zielobjektes als gleichmäßige Helligkeit darstellt. Die Abweichung der Bildbereiche zum hellsten Bildbereich des Bildausschnittes muss kleiner als ein erster Grenzwert sein. Der erste Grenzwert beträgt beispielsweise 5 %, d.h. alle Bildbereiche des Bildausschnittes weisen eine Abweichung kleiner als 5 % zum hellsten Bildbereich auf. Der erste Grenzwert ist vorab festgelegt und in der Kontrolleinrichtung gespeichert.

Das Kalibrierverfahren wird nach dem Vergleich des ersten Kontrastes mit dem ersten Grenzwert abgebrochen, wenn der erste Kontrast den ersten Grenzwert überschreitet; das Kalibrierverfahren wird nur fortgesetzt, wenn der erste Kontrast den ersten Grenzwert unterschreitet bzw. nicht überschreitet. Wenn der erste Kontrast des Bildausschnittes den ersten Grenzwert überschreitet, ist das Zielobjekt für die Kalibrierung des Messgerätes ungeeignet und das Kalibrierverfahren wird abgebrochen. Das Messgerät kann von der Kontrolleinrichtung aus dem Kalibriermodus in einen Messmodus umgeschaltet werden; als Position der Zielachse wird für weitere Messungen die in der Kontrolleinrichtung gespeicherte Position verwendet.

Der zweite Kontrast ist durch die Differenz aus 1 und dem Verhältnis der Messwerte zwischen dem hellsten Bildbereich (maximaler Messwert) des Umgebungsbereiches und dem dunkelsten Bildbereich (minimaler Messwert) des Empfangsstrahles definiert und wird als Prozentwert angegeben. Um den Messfehler bei der Kalibrierung zu begrenzen, sollte der Empfangsstrahl eine höhere Helligkeit gegenüber dem Umgebungsbereich aufweisen. Der Unterschied der Bildbereiche des Laserstrahles zu den Bildbereichen des Umgebungsbereiches muss grösser als ein zweiter Grenzwert sein. Der zweite Grenzwert beträgt beispielsweise 10 %. d.h. alle Bildbereiche des Laserstrahles weisen eine um mindestens 10 % höhere Lichtstärke als die Bildbereiche des Umgebungsbereiches auf. Der zweite Grenzwert ist vorab festgelegt und in der Kontrolleinrichtung gespeichert.

Das Kalibrierverfahren wird nach dem Vergleich des zweiten Kontrastes mit dem zweiten Grenzwert abgebrochen, wenn der zweite Kontrast den zweiten Grenzwert unterschreitet; das Kalibrierverfahren wird nur fortgesetzt, wenn der zweite Kontrast den zweiten Grenzwert überschreitet bzw. nicht unterschreitet. Wenn der zweite Kontrast den zweiten Grenzwert unterschreitet, ist das Zielobjekt für die Kalibrierung des Messgerätes ungeeignet und das Kalibrierverfahren wird abgebrochen. Das Messgerät kann von der Kontrolleinrichtung aus dem Kalibriermodus in einen Messmodus umgeschaltet werden; als Position der Zielachse wird für weitere Messungen die in der Kontrolleinrichtung gespeicherte Position verwendet.

Eine bevorzugte Weiterentwicklung des erfindungsgemäßen Verfahrens zum Kalibrieren eines Messgerätes ist gekennzeichnet durch die zusätzlichen Schritte:
▪ Ausführen einer Distanzmessung zum Zielobjekt und
▪ Vergleichen der gemessenen Distanz mit einem in der Kontrolleinrichtung gespeicherten Distanzbereich.

Die Distanz des Messgerätes zum Zielobjekt ist ein weiteres Bewertungskriterium, das die Qualität eines Zielobjektes für die Kalibrierung eines Messgerätes bewertet. Die Distanzmessung und der Vergleich mit dem in der Kontrolleinrichtung gespeicherten Distanzbereich können ausgeführt werden, bevor die Kameraeinrichtung das erste Bild des Zielobjektes aufnimmt, nachdem das erste Bewertungskriterium geprüft wurde oder nachdem das zweite Bewertungskriterium geprüft wurde.

Das Kalibrierverfahren wird besonders bevorzugt abgebrochen, wenn die gemessene Distanz des Messgerätes zum Zielobjekt außerhalb des gespeicherten Distanzbereiches liegt; das Kalibrierverfahren wird nur fortgesetzt, wenn die gemessene Distanz innerhalb des gespeicherten Distanzbereiches liegt. Um den Messfehler bei der Kalibrierung zu begrenzen, sollte das Zielobjekt innerhalb eines festgelegten Distanzbereiches angeordnet sein. Wenn die Distanz außerhalb des Distanzbereiches liegt, ist das Zielobjekt für die Kalibrierung des Messgerätes ungeeignet und das Kalibrierverfahren wird abgebrochen. Für Distanzen, die oberhalb des Distanzbereiches liegen, besteht die Gefahr, dass die Lichtstärke der Bildbereiche innerhalb des Laserstrahles zu gering ist. Das Messgerät kann von der Kontrolleinrichtung aus dem Kalibriermodus in einen Messmodus umgeschaltet werden; als Position der Zielachse wird für weitere Messungen die in der Kontrolleinrichtung gespeicherte Position verwendet.

Zur Ausführung des erfindungsgemäßen Verfahrens zum Kalibrieren eines Messgerätes umfasst das Messgerät:
▪ eine Lasermesseinrichtung, die einen Laserstrahl entlang einer Messachse aussendet,
▪ eine Kameraeinrichtung mit einer Zielachse und
▪ eine Kontrolleinrichtung mit einem Steuerelement zur Steuerung der Lasereinrichtung und der Kameraeinrichtung, einem Auswerteelement und einem Speicherelement.

In einer bevorzugten Weiterentwicklung des Messgerätes weist die Kameraeinrichtung eine Kameraoptik auf, die zwischen einer ersten und zweiten Brennweite verstellbar ist, wobei im Speicherelement für die erste Brennweite der Kameraoptik eine erste Position der Zielachse und für die zweite Brennweite der Kameraoptik eine zweite Position der Zielachse gespeichert ist. Bei einer Kameraoptik mit beweglichen Optiken ändert sich die Ausrichtung der Zielachse durch die Bewegung der Optiken. Die Messgenauigkeit eines Messgerätes kann verbessert werden, wenn für verschiedene Brennweiten der Kameraoptik die jeweilige Position der Zielachse gespeichert ist.

Besonders bevorzugt ist die Kameraoptik zwischen mehr als zwei Brennweiten schaltbar, wobei im Speicherelement für jede Brennweite der Kameraoptik eine Position der Zielachse gespeichert ist. Die Instabilität der Kameraoptik und damit die Instabilität der Zielachse nehmen zu, je grösser bei beweglichen Optiken der mechanische Verstellbereich ist. Die Messgenauigkeit eines Messgerätes kann verbessert werden, wenn für verschiedene Brennweiten die jeweilige Position der Zielachse gespeichert ist.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: ein Messgerät zur Vermessung von Zielobjekten in einer schematischen Darstellung;
- FIG. 2: das Messgerät der FIG. 1, das nach dem erfindungsgemäßen Verfahren zur Kalibrierung kalibrierbar ist, mit einer Distanzmesseinrichtung, einer Kameraeinrichtung und einer Kontrolleinrichtung;
- FIG. 3: eine Ausführungsvariante des erfindungsgemäßen Verfahrens zur Kalibrierung eines Messgerätes in einem Ablaufdiagramm;
- FIGN. 4A-C: ein erstes Bild eines Zielobjektes bei ausgeschaltetem Laserstrahl (FIG. 4A), ein zweites Bild des Zielobjektes bei eingeschaltetem Laserstrahl (FIG. 4B) und ein Differenzbild zwischen dem ersten und zweiten Bild (FIG. 4C); und
- FIG. 5: eine weitere Ausführungsvariante des erfindungsgemäßen Verfahrens zur Kalibrierung eines Messgerätes in einem Ablaufdiagramm.

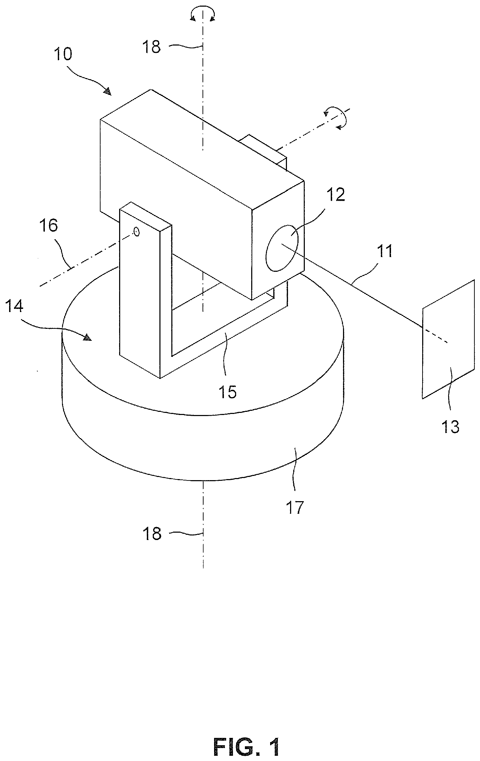

**FIG. 1** zeigt ein optisches Messgerät **10** zur Vermessung von Zielobjekten in einer schematischen Darstellung. Im Messgerät 10 wird ein Laserstrahl **11** erzeugt, der über eine Auskoppelöffnung **12** aus dem Messgerät 10 austritt und auf ein Zielobjekt **13** ausgerichtet wird.

Das Messgerät 10 ist mittels einer Verstelleinrichtung **14** in mehreren Richtungen verstellbar, so dass der Laserstrahl 11 auf verschiedene Zielobjekte, die sich beispielsweise in der Höhe und/oder der Winkelausrichtung unterscheiden können, ausgerichtet werden kann. Das Messgerät 10 ist in einem U-förmigen Lagerelement **15** gelagert und relativ zum Lagerelement 15 um eine horizontale Kippachse **16** verstellbar. Das Lagerelement 15 ist auf einem Stativteller **17** angeordnet und relativ zum Stativteller 17 um eine vertikale Drehachse **18** drehbar, so dass Zielobjekte in allen Winkellagen angezielt werden können. Das Stativ, auf dem das Messgerät 10 befestigt ist, ist üblicherweise so ausgerichtet, dass die Kippachse 16 senkrecht zum Lot und die Drehachse 18 parallel zum Lot angeordnet sind.

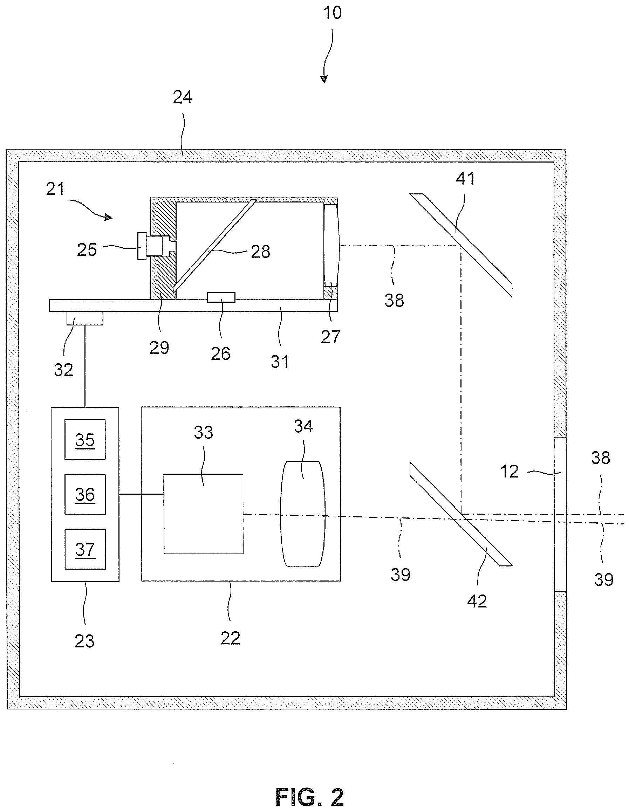

**FIG. 2** zeigt die wesentlichen Komponenten des Messgerätes 10, das nach dem erfindungsgemäßen Verfahren kalibrierbar ist. Das Messgerät 10 weist eine Lasermesseinrichtung **21,** eine Kameraeinrichtung **22** und eine Kontrolleinrichtung **23** auf. Die Komponenten 21, 22, 23 des Messgerätes 10 können, wie in FIG. 2 gezeigt, in einem gemeinsamen Gerätegehäuse **24** angeordnet sein oder die Komponenten 21, 22, 23 sind in mehreren Gehäuseteilen angeordnet.

Die Lasermesseinrichtung 21 ist als Distanzmesseinrichtung mit einer koaxialen Anordnung der elektro-optischen Komponenten (Strahlquelle und Detektor) ausgebildet. Distanzmesseinrichtungen mit einer koaxialen Anordnung der elektro-optischen Komponenten besitzen gegenüber paraaxialen Anordnungen, bei denen die optischen Achsen der elektro-optischen Komponenten parallel versetzt verlaufen, den Vorteil der Parallaxefreiheit und sind daher für die Anwendung im Messgerät 10 besser geeignet. Die Distanzmesseinrichtung 21 umfasst eine als Strahlquelle **25** ausgebildete erste elektro-optische Komponente, eine als Detektor **26** ausgebildete zweite elektro-optische Komponente, eine Strahlformungsoptik **27,** eine Strahlteilungsoptik **28,** einen Optikträger **29,** eine Leiterplatte **31** und ein Kontrollelement **32.** Für den Aufbau eines Messgerätes 10 mit einer hohen Messgenauigkeit eignen sich besonders Lasermesseinrichtungen 21, die eine hohe Stabilität aufweisen. Eine stabile Distanzmesseinrichtung mit einer koaxialen Anordnung der elektro-optischen Komponenten ist in EP 2 527 866 A2 und EP 2 527 867 A2 im Detail beschrieben.

Die Strahlquelle 25 ist als Laserdiode ausgebildet, die einen Laserstrahl im sichtbaren oder infraroten Spektrum erzeugt. Der Detektor 26 ist als Fotodiode ausgebildet, wobei die Eigenschaften der Fotodiode 26 an die Laserdiode 25 angepasst sind. Das Kontrollelement 32 ist mit der Strahlquelle 25 und dem Detektor 26 verbunden und bestimmt aus einer Zeitdifferenz zwischen einem Referenzstrahl und einem vom Detektor 26 erfassten Empfangsstrahl die Distanz zum Zielobjekt 13. Die Strahlformungsoptik 27 ist als Linse ausgebildet, die sowohl den ausgesandten Laserstrahl als auch den vom Zielobjekt 13 reflektierten und/oder gestreuten Empfangsstrahl formt. Mit Hilfe der Strahlteilungsoptik 28 wird der von der Strahlquelle 25 kommende Laserstrahl vom reflektierten und/oder gestreuten Empfangsstrahl räumlich getrennt.

Die Kameraeinrichtung **22** umfasst einen Bildsensor **33** und eine Kameraoptik **34.** Als Bildsensor eignet sich jedes lichtempfindliche elektronische Bauelement, mit dem von einem Zielobjekt ein digitales Bild erstellen werden kann. Als Bildsensoren werden beispielsweise CCD-Sensoren, CID-Sensoren oder CMOS-Sensoren verwendet. Bildsensoren bestehen aus einem Array lichtempfindlicher Elemente; die kleinste Einheit des Bildsensors wird als Pixel bezeichnet und die Kameraeinrichtung liefert für jeden Pixel einen Messwert, der als Pixelwert bezeichnet wird. Jeder Pixel des Bildsensors entspricht einem Bildbereich im Bild des Zielobjektes. Je grösser die Fläche der Pixel ist, desto höher ist die Lichtempfindlichkeit und desto kleiner ist aber die Bildauflösung. Die Kameraoptik 34 kann, wie in FIG. 2 gezeigt, aus einer einzelnen Optik bestehen oder mehrere Optiken umfassen, die zueinander beweglich ausgebildet sind. Durch eine Kameraoptik 34 mit mehreren Optiken kann die optische Auflösung der Kameraeinrichtung 22 erhöht werden, wobei die Stabilität durch die beweglichen Optiken reduziert wird.

Die Kontrolleinrichtung 23 umfasst ein Steuerelement **35** zur Steuerung der Distanzmesseinrichtung 21 und der Kameraeinrichtung 22, ein Auswerteelement **36** zur Auswertung der Bilder, die von der Kameraeinrichtung 22 aufgenommen wurden, sowie ein Speicherelement **37** zur Speicherung voreingestellter Parameter für das Kalibrierverfahren. Die Steuerung der Kameraeinrichtung 22 und die Auswertung der Bilder erfolgt über die Kontrolleinrichtung 23, die über eine Kommunikationsverbindung mit der Kameraeinrichtung 22 verbunden ist; alternativ kann das Auswerteelement 36 in die Kameraeinrichtung 22 integriert und über eine Kommunikationsverbindung mit der Kontrolleinrichtung 23 verbunden werden. Das Kontrollelement 32 der Distanzmesseinrichtung 21 ist über eine Kommunikationsverbindung mit der Kontrolleinrichtung 23 verbunden. Die Steuerung der elektro-optischen Komponenten 25, 26 und die Berechnung der Distanz erfolgen in dieser Ausführung mittels des Kontrollelementes 32; der Steuerbefehl, eine Distanzmessung auszuführen oder den Laserstrahl 11 als Positionierstrahl auszusenden, wird vom Steuerelement 35 erstellt. Alternativ kann das Kontrollelement 32 in die Kontrolleinrichtung 23 integriert werden.

Die Distanzmesseinrichtung 21 und die Kameraeinrichtung 22 müssen genau zueinander angeordnet sein, um Messfehler bei der Vermessung zu reduzieren. Als Messachse 38 der Distanzmesseinrichtung 21 ist die optische Achse des Laserstrahles definiert und als Zielachse **39** der Kameraeinrichtung 22 die optische Achse der Kameraoptik 34. Damit die Messachse 38 und die Zielachse 39 koaxial zueinander angeordnet sind, sind im Gerätegehäuse 24 ein erster und zweiter Umlenkspiegel **41, 42** angeordnet, die den Laserstrahl und den Empfangsstrahl zweifach umlenken. Die Umlenkspiegel 41, 42 sind für die Wellenlänge des Laserstrahls und des Empfangsstrahls reflektierend ausgebildet. Der aus der Distanzmesseinrichtung 21 ausgetretene Laserstrahl trifft auf den ersten Umlenkspiegel 41, der den Laserstrahl um 90° umlenkt. Der umgelenkte Laserstrahl trifft auf den zweiten Umlenkspiegel 42, der den Laserstrahl ebenfalls um 90° umlenkt. Die optische Achse 38 des zweifach umgelenkten Laserstrahls verläuft nur im Idealfall koaxial zur optischen Achse 39 der Kameraeinrichtung 22, in der Praxis können die Messachse 38 und Zielachse 39 zueinander verkippt sein.

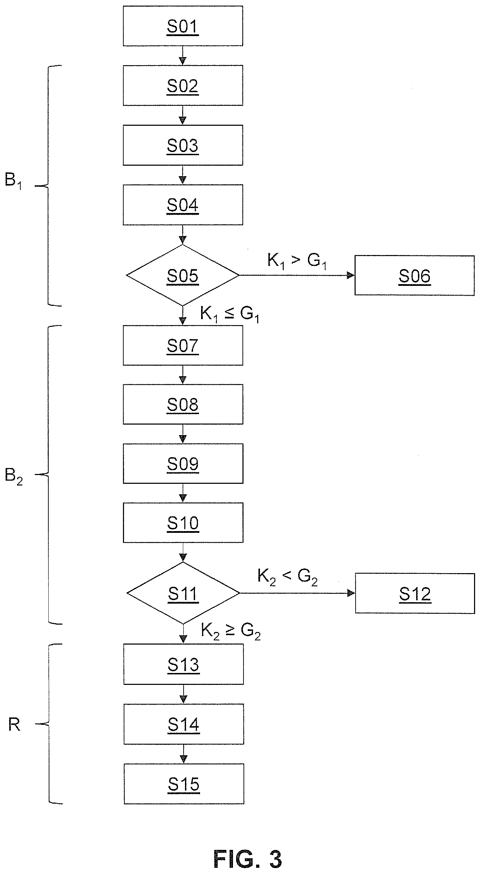

**FIG. 3** zeigt eine Ausführungsvariante des erfindungsgemäßen Verfahrens zur Kalibrierung eines Messgerätes mittels eines Zielobjektes in einem Ablaufdiagramm. Das Verfahren wird am Beispiel des Messgerätes 10 erläutert. Die Kalibrierung des Messgerätes 10 erfolgt automatisch und erfordert kein Eingreifen eines Bedieners. Das erfindungsgemäße Verfahren kann einmalig nach dem Einschalten des Messgerätes 10, nach Ablauf eines voreingestellten Zeitintervalls oder nach Durchführung einer voreingestellten Anzahl von Messungen durchgeführt werden. Das Messgerät 10 soll bei der in FIG. 3 gezeigten Ausführungsvariante nach einer voreingestellten Anzahl von Messungen kalibriert werden.

Die Position der Zielachse 39 der Kameraeinrichtung 22 wird vom Gerätehersteller gemessen und im Speicherelement 37 als Positionskoordinate **X_{P}, Y_{P}** gespeichert. Wenn in der Kameraeinrichtung 22 eine Kameraoptik 34 mit zwei Brennweiten **f**₁, **f**₂ verwendet wird, können die Positionen der Zielachse 39 für jede Brennweite der Kameraeinrichtung 22 gemessen und als Positionskoordinaten **X**_{P1}, **Y**_{P1} für die erste Brennweite **f**₁ und **X**_{P2}, **Y**_{P2} für die zweite Brennweite f₂ im Speicherelement 37 der Kontrolleinrichtung 23 gespeichert werden. Die, im Speicherelement 37 gespeicherte, Position der Zielachse 39 ist im aktuellen Bild des Zielobjektes, das auf dem Bildsensor 33 dargestellt ist, beispielsweise als Fadenkreuz eingeblendet. Das Fadenkreuz soll dem Bediener ein zielgenaues Positionieren des Laserstrahles erleichtern.

Nachdem das Messgerät 10 die voreingestellte Anzahl von Messungen durchgeführt hat, schaltet das Steuerelement 35 der Kontrolleinrichtung 23 das Messgerät 10 in einem Schritt **S01** in einen Kalibriermodus. Im Kalibriermodus ist die Kameraeinrichtung 22 auf das Zielobjekt 13 ausgerichtet und der Laserstrahl 11 der Distanzmesseinrichtung 21 ist ausgeschaltet.

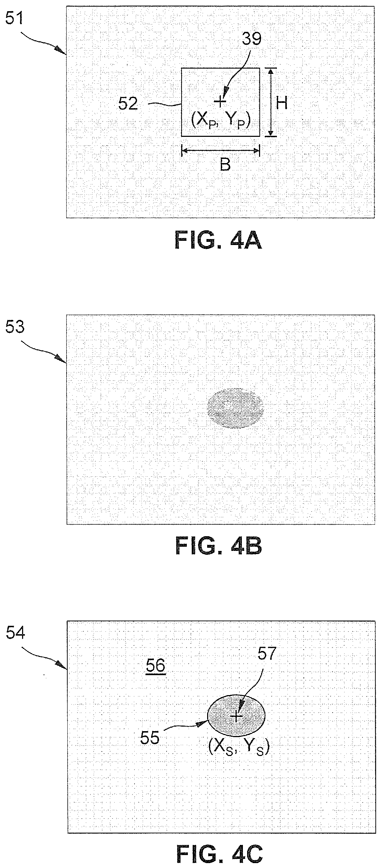

In einem Schritt **S02** wird mittels der Kameraeinrichtung 22 ein erstes Bild **51** des Zielobjektes 13 aufgenommen, das in **FIG. 4A** schematisch dargestellt ist. Das Steuerelement 35 erstellt einen entsprechenden Steuerbefehl für den Bildsensor 33, der das erste Bild 51 des Zielobjektes 13 speichert und an die Kontrolleinrichtung 23 übermittelt. In einem Schritt **S03** wird im ersten Bild 51 des Zielobjektes 13 mittels des Auswerteelementes 36 ein Bildausschnitt **52** um die im Speicherelement 37 gespeicherte Positionskoordinate X_{P}, Y_{P} der Zielachse 39 festgelegt. Die Abmessungen, Höhe **H** und Breite **B,** des Bildausschnittes 52 sind vorab festgelegt und ebenfalls im Speicherelement 37 der Kontrolleinrichtung 23 gespeichert. Die in Schritt S03 durchgeführte Auswertung des ersten Bildes 51 erfolgt in der Kontrolleinrichtung 23 und wird dem Bediener nicht angezeigt.

In einem Schritt **S04** bestimmt das Auswerteelement 36 für die Pixel, die innerhalb des Bildausschnittes 52 liegen, die jeweilige Lichtstärke und berechnet einen ersten Kontrast **K**₁ als Differenz aus 1 und dem Verhältnis der Lichtstärken zwischen dem dunkelsten Pixel **P_{1, min}** des Bildausschnittes 52 und dem hellsten Pixel **P_{1, max}** des Bildausschnittes 52 nach der Formel K₁ = (1 - P_{1, min} / P_{1, max}) * 100 %. Ein erster Kontrast K₁ von 100 % entspricht einem maximalen Unterschied in der Lichtstärke, d.h. das dunkelste Pixel P_{1, min} weist keine Lichtstärke auf und das hellste Pixel P_{1, max} eine maximale Lichtstärke. Bei einem ersten Kontrast K₁ von 0 % besteht zwischen dem dunkelsten Pixel P_{1, min} und dem hellsten Pixel P_{1, max} kein Unterschied in der Lichtstärke, d.h. alle Pixel des Bildausschnittes 52 weisen die gleiche Lichtstärke auf.

In Schritt S04 wird der erste Kontrast K₁ aus dem Verhältnis der Lichtstärken zwischen dem dunkelsten Pixel P_{1, min} des Bildausschnittes 52 und dem hellsten Pixel P_{1, max} des Bildausschnittes 52 berechnet. Alternativ können die Pixelwerte mehrerer benachbarter Pixel gemittelt und zur Berechnung des ersten Kontrastes K₁ verwendet werden. Als "Bildbereich" wird die kleinste Einheit der Bilder des Zielobjektes bezeichnet, die für die Bewertung des Zielobjektes 13 im Rahmen des erfindungsgemäßen Verfahrens herangezogen wird. Der Bildbereich kann ein einzelnes Pixel sein oder mehrere benachbarte Pixel umfassen, deren Pixelwerte zu einem Messwert gemittelt werden, wobei die Pixelwerte bei der Mittelung gleich oder unterschiedlich gewichtet werden können.

Der, in Schritt S04 berechnete, erste Kontrast K₁ des Bildausschnittes 52 wird vom Auswerteelement 36 in einem Schritt **S05** mit einem ersten Grenzwert **G**₁ verglichen. Um den Messfehler bei der Kalibrierung zu begrenzen, sollte das Zielobjekt 13 eine möglichst gleichmäßige Helligkeit aufweisen. Der erste Grenzwert G₁ beträgt beispielsweise 5 %, d.h. alle Pixel des Bildausschnittes 52 weisen eine Abweichung kleiner als 5 % zum hellsten Pixel P_{1, max} auf. Der erste Grenzwert G₁ ist vorab festgelegt und im Speicherelement 37 der Kontrolleinrichtung 23 gespeichert. Wenn der erste Kontrast K₁ des Bildausschnittes 52 den ersten Grenzwert G₁ überschreitet (K₁ > G₁), ist das Zielobjekt 13 für die Kalibrierung des Messgerätes 10 ungeeignet. Das Messgerät 10 wird vom Steuerelement 35 in einem Schritt **S06** aus dem Kalibriermodus in einen Messmodus umgeschaltet.

Das erfindungsgemäße Verfahren wird nach Schritt S05 nur fortgesetzt, wenn der erste Kontrast K₁ des Bildausschnittes 52 den ersten Grenzwert G₁ nicht überschreitet (K₁ ≤ G₁). In einem Schritt **S07** wird mittels der Kameraeinrichtung 22 ein zweites Bild **53** des Zielobjektes 13 bei eingeschaltetem Laserstrahl 11 aufgenommen, das in **FIG. 4B** schematisch dargestellt ist. Das Steuerelement 35 erstellt entsprechende Steuerbefehle für die Distanzmesseinrichtung 21 und die Kameraeinrichtung 22; der Bildsensor 33 speichert das zweite Bild 53 des Zielobjektes 13 und übermittelt es an die Kontrolleinrichtung 23. Das Auswerteelement 36 bestimmt in einem Schritt **S08** ein, in **FIG. 4C** schematisch dargestelltes, Differenzbild **54** zwischen dem ersten und zweiten Bild 51, 53 des Zielobjektes 13. Um Helligkeitsunterschiede, die auf Verunreinigungen des Bildsensors 33, eine ungleichmäßige Empfindlichkeit der Pixel, etc. zurückgehen, ausgleichen zu können, können das erste und zweite Bild 51, 53 des Zielobjektes 13 vor der Auswertung für das erfindungsgemäße Verfahren mit bekannten Bildverarbeitungsverfahren, wie Weißbild- oder Flat-Field-Korrektur, bearbeitet werden. Im Differenzbild 54 des Zielobjektes 13 werden in einem Schritt **S09** mittels des Auswerteelementes 36 ein vom Zielobjekt 13 reflektierter und/oder gestreuter Empfangsstrahl **55** und ein Umgebungsbereich **56** identifiziert. Dazu werden bekannte Methoden der Objekterkennung angewandt. In einem Schritt **S10** bestimmt das Auswerteelement 36 die Lichtstärke der einzelnen Pixel im Differenzbild 54 für den Empfangsstrahl 55 und den Umgebungsbereich 56 und berechnet einen zweiten Kontrast **K₂** als Differenz aus 1 und dem Verhältnis der Lichtstärken zwischen dem hellsten Pixel **P_{2, min}** des Umgebungsbereiches 56 und dem dunkelsten Pixel **P_{2, max}** des Empfangsstrahles 55 nach der Formel K₂ = (1 - P_{2,min} / P_{2, max}) * 100 %. Analog zum ersten Kontrast K₁ können die Pixelwerte mehrerer benachbarter Pixel zu einem Messwert gemittelt und für die Berechnung des zweiten Kontrastes K₂ herangezogen werden.

Der in Schritt S10 berechnete zweite Kontrast K₂ wird in einem Schritt **S11** mittels des Auswerteelementes 36 mit einem zweiten Grenzwert **G₂** verglichen. Um den Messfehler bei der Kalibrierung zu begrenzen, sollte der Empfangsstrahl 55 eine höhere Helligkeit gegenüber dem Umgebungsbereich 56 aufweisen. Der zweite Grenzwert G₂ beträgt beispielsweise 10 %, d.h. alle Pixel des Empfangsstrahles 55 weisen eine um mindestens 10 % höhere Lichtstärke als die Pixel des Umgebungsbereiches 56 auf. Der zweite Grenzwert G₂ ist vorab festgelegt und im Speicherelement 37 der Kontrolleinrichtung 23 gespeichert. Wenn der zweite Kontrast K₂ den zweiten Grenzwert G₂ unterschreitet (K₂ < G₂), ist das Zielobjekt 13 für die Kalibrierung des Messgerätes 10 ungeeignet. Das Messgerät 10 wird vom Steuerelement 35 in einem Schritt **S12** aus dem Kalibriermodus in einen Messmodus umgeschaltet.

Das erfindungsgemäße Verfahren wird nach Schritt S11 nur fortgesetzt, wenn der zweite Kontrast K₂ den zweiten Grenzwert G₂ nicht unterschreitet (K₂ ≥ G₂). In einem Schritt **S13** wird mittels des Auswerteelementes 36 ein Schwerpunkt **57** des Empfangsstrahles 55 und die zugehörigen Schwerpunktkoordinaten **X_{S}, Y_{S}** bestimmt. Dazu werden bekannte Methoden der Objekterkennung angewandt. Die Schwerpunktkoordinaten X_{S}, Y_{S} des Empfangsstrahles 55 werden in einem Schritt **S14** als neue Position der Zielachse 39 für die Kameraeinrichtung 22 im Speicherelement 37 gespeichert. Das Auswerteelement 36 übermittelt die Schwerpunktkoordinaten X_{S}, Y_{S} an das Speicherelement 37, das die Schwerpunktkoordinaten X_{S}, Y_{S} als neue Positionskoordinaten X_{P}, Y_{P} der Zielachse 39 speichert. Das Messgerät 10 wird vom Steuerelement 35 in einem Schritt **S15** aus dem Kalibriermodus in einen Messmodus umgeschaltet.

Das in FIG. 3 dargestellte erfindungsgemäße Verfahren lässt sich in drei Teile unterteilen. In den Schritten S02 bis S05 wird die Gleichmäßigkeit in der Helligkeit des Zielobjektes 13 anhand des ersten Kontrastes K₁ geprüft, der ein erstes Bewertungskriterium für das Zielobjekt 13 darstellt. Die Schritte S02 bis S05 werden als erster Bewertungsteil **B₁** zusammengefasst. In den Schritten S07 bis S11 wird der Unterschied in der Helligkeit zwischen dem Empfangsstrahl 55 und dem Umgebungsbereich 56 anhand des zweiten Kontrastes K₂ geprüft, der ein zweites Bewertungskriterium für das Zielobjekt 13 darstellt. Die Schritte S07 bis S11 werden als zweiter Bewertungsteil **B₂** zusammengefasst. Wenn das Zielobjekt 13 den ersten und zweiten Bewertungsteil B₁, B₂ bestanden hat, wird die Position der Zielachse 39 in den Schritten S13 bis S15 bestimmt und als neue Position gespeichert. Die Schritte S13 bis S14 werden als Berechnungsteil **R** zusammengefasst.

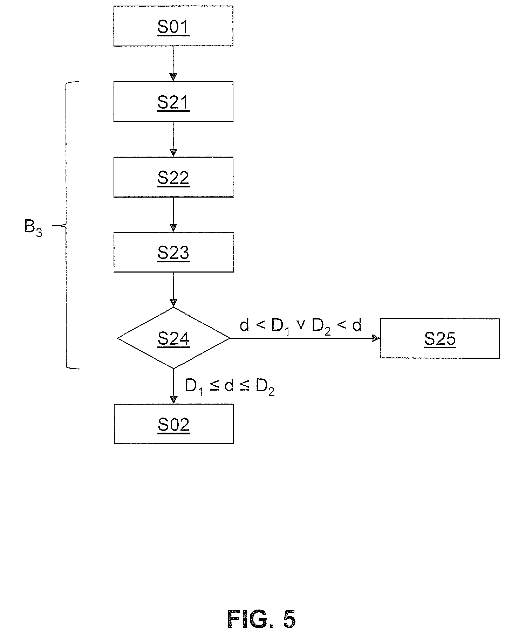

**FIG. 5** zeigt eine weitere Ausführungsvariante des erfindungsgemäßen Verfahrens zur Kalibrierung eines Messgerätes mittels eines Zielobjektes in einem Ablaufdiagramm. Diese Ausführungsvariante unterscheidet sich von dem Verfahren der FIG. 3 dadurch, dass neben dem ersten Kontrast K₁ und dem zweiten Kontrast K₂ ein weiteres Bewertungskriterium für das Zielobjekt 13 geprüft wird.

Die Distanz des Messgerätes 10 zum Zielobjekt 13 ist ein drittes Bewertungskriterium, das die Qualität eines Zielobjektes für die Kalibrierung eines Messgerätes bewertet. In einem Schritt **S21** erstellt das Steuerelement 35 einen Steuerbefehl für die Distanzmesseinrichtung 21. Die Distanzmesseinrichtung 21 misst in einem Schritt **S22** die Distanz **d** des Messgerätes 10 zum Zielobjekt 13. Die gemessene Distanz d wird in einem Schritt **S23** vom Kontrollelement 32 an die Kontrolleinrichtung 23 übermittelt.

Die Distanz d wird in einem Schritt **S24** mittels des Auswerteelementes 36 mit einem Distanzbereich **(D**₁, **D**₂) verglichen. Um den Messfehler bei der Kalibrierung zu begrenzen, sollte das Zielobjekt 13 innerhalb des Distanzbereiches (D₁, D₂) angeordnet sein. Für Distanzen, die oberhalb des Distanzbereiches liegen, besteht die Gefahr, dass die Lichtstärke der Pixel innerhalb des Laserstrahles zu gering ist. Der Distanzbereich (D₁, D₂) ist vorab festgelegt und im Speicherelement 37 der Kontrolleinrichtung 23 gespeichert. Wenn die Distanz d außerhalb des Distanzbereichs liegt (d < D₁ oder d > D₂), ist das Zielobjekt 13 für die Kalibrierung des Messgerätes 10 ungeeignet. Das Messgerät 10 wird vom Steuerelement 35 in einem Schritt **S25** aus dem Kalibriermodus in einen Messmodus umgeschaltet. Das erfindungsgemäße Verfahren wird nach Schritt S24 nur fortgesetzt, wenn die Distanz innerhalb des Distanzbereichs liegt (D₁ ≤ d ≤ D₂).

Die Schritte S21 bis S24 werden als dritter Bewertungsteil **B**₃ zusammengefasst. Die Distanzmessung (Schritte S21 bis S23) und der Vergleich mit dem Distanzmessbereich (Schritt S24) können, wie in FIG. 5 gezeigt, ausgeführt werden, bevor die Kameraeinrichtung 22 das erste Bild des Zielobjektes 13 aufnimmt (Schritt S02). Alternativ kann der dritte Bewertungsteil B₃ nach dem ersten Bewertungsteil B₁ oder nach dem zweiten Bewertungsteil B₂ ausgeführt werden.

## Patentansprüche

1. Verfahren zum Kalibrieren eines Messgerätes (10), das eine Lasermesseinrichtung (21), die einen Laserstrahl (11) entlang einer Messachse (38) aussendet, eine Kameraeinrichtung (22) mit einer Zielachse (39) und eine Kontrolleinrichtung (23) aufweist, mit den Schritten:
▪ Aufnehmen eines ersten Bildes (51) eines Zielobjektes (13) bei ausgeschaltetem Laserstrahl (11) mittels der Kameraeinrichtung (22),
▪ Festlegen eines Bildausschnittes (52) um die in der Kontrolleinrichtung (23) gespeicherte Position (X_{P}, Y_{P}) der Zielachse (39) im ersten Bild des Zielobjektes (13),
▪ Bestimmen eines ersten Kontrastes (K₁) zwischen dem dunkelsten Bildbereich (P₁, ₘᵢₙ) des Bildausschnittes (52) und dem hellsten Bildbereich (P_{1, max}) des Bildausschnittes (52),
▪ Vergleichen des ersten Kontrastes (K₁) mit einem in der Kontrolleinrichtung (23) gespeicherten ersten Grenzwert (G₁),
▪ Aufnehmen eines zweiten Bildes (53) des Zielobjektes (13) bei eingeschaltetem Laserstrahl (11) mittels der Kameraeinrichtung (22), wenn der erste Kontrast (K₁) den ersten Grenzwert (G₁) nicht überschreitet,
▪ Bestimmen eines Differenzbildes (54) zwischen dem ersten und dem zweiten Bild (51, 53) des Zielobjektes (13),
▪ Identifizieren eines vom Zielobjekt (13) reflektierten und/oder gestreuten Empfangsstrahles (55) und eines Umgebungsbereiches (56) im Differenzbild (54) des Zielobjektes (13),
▪ Bestimmen eines zweiten Kontrastes (K₂) zwischen dem hellsten Bildbereich (P_{2, min}) des Umgebungsbereiches (56) und dem dunkelsten Bildbereich (P_{2, max}) des Empfangsstrahles (55),
▪ Vergleichen des zweiten Kontrastes (K₂) mit einem in der Kontrolleinrichtung (23) gespeicherten zweiten Grenzwert (G₂),
▪ Bestimmen eines Schwerpunktes (57) des Empfangsstrahles (55) und der Schwerpunktkoordinaten (X_{S}, Y_{S}), wenn der zweite Kontrast (K₂) den zweiten Grenzwert (G₂) nicht unterschreitet, und
▪ Speichern der Schwerpunktkoordinaten (X_{S}, Y_{S}) des Empfangsstrahles (55) als neue Position (X_{P}, Y_{P}) der Zielachse (39) in der Kontrolleinrichtung (23)_{.}

2. Verfahren nach Anspruch 1, **dadurch gekennzeichnet, dass** das Verfahren nach dem Vergleich des ersten Kontrastes (K₁) mit dem ersten Grenzwert (G₁) abgebrochen wird, wenn der erste Kontrast (K₁) den ersten Grenzwert (G₁) überschreitet.

3. Verfahren nach Anspruch 1, **dadurch gekennzeichnet, dass** das Verfahren nach dem Vergleich des zweiten Kontrastes (K₂) mit dem zweiten Grenzwert (G₂) abgebrochen wird, wenn der zweite Kontrast (K₂) den zweiten Grenzwert (G₂) unterschreitet.

4. Verfahren nach Anspruch 1, **gekennzeichnet durch** die zusätzlichen Schritte:
▪ Ausführen einer Distanzmessung zum Zielobjekt (13) und
▪ Vergleichen der gemessenen Distanz (d) mit einem in der Kontrolleinrichtung (23) gespeicherten Distanzbereich (D₁, D₂).

5. Verfahren nach Anspruch 4, **dadurch gekennzeichnet, dass** das Verfahren abgebrochen wird, wenn die gemessene Distanz (d) zum Zielobjekt (13) außerhalb des Distanzbereiches (D₁, D₂) liegt.

6. Messgerät (10; 20) zur Durchführung eines Verfahrens nach einem der Ansprüche 1 bis 5, aufweisend:
▪ eine Lasermesseinrichtung (21), die einen Laserstrahl (11) entlang einer Messachse (38) aussendet,
▪ eine Kameraeinrichtung (22) mit einer Zielachse (39) und
▪ eine Kontrolleinrichtung (23) mit einem Steuerelement (35) zur Steuerung der Lasereinrichtung (21) und der Kameraeinrichtung (22), einem Auswerteelement (36) und einem Speicherelement (37).

7. Messgerät nach Anspruch 6, **dadurch gekennzeichnet, dass** die Kameraeinrichtung (22) eine Kameraoptik (34) aufweist, die zwischen einer ersten und zweiten Brennweite (f₁, f₂) schaltbar ist, wobei im Speicherelement (37) für die erste Brennweite (f₁) der Kameraoptik (34) eine erste Position (X_{P1}, Y_{P1}) der Zielachse (39) und für die zweite Brennweite (f₂) der Kameraoptik (34) eine zweite Position (X_{P2}, Y_{P2}) der Zielachse (39) gespeichert ist.

8. Messgerät nach Anspruch 7, **dadurch gekennzeichnet, dass** die Kameraoptik (34) zwischen mehr als zwei Brennweiten schaltbar ist, wobei im Speicherelement (37) für jede Brennweite der Kameraoptik (34) eine Position der Zielachse (39) gespeichert ist.

## Claims

1. Method of calibrating a measuring instrument (10) comprising a laser measuring device (21) that emits a laser beam (11) along a measuring axis (38), a camera device (22) having a target axis (39), and a control device (23), comprising the steps:
▪ taking a first image (51) of a target object (13) by means of the camera (22) with the laser beam (11) turned off,
▪ defining an image portion (52) about a position (Xp, Yp) of the target axis (39) stored in the control device (23) in the first image of the target object (13),
▪ determining a first contrast (K₁) between the darkest image region (P_{1, min}) of the image portion (52) and the brightest image region (P_{1, max}) of the image portion (52),
▪ comparing the first contrast (K₁) with a first limit value (G₁) stored in the control device (23),
▪ taking a second image (53) of the target object (13) by means of the camera device (22) with the laser beam (11) turned on, if the first contrast (K₁) does not exceed the first limit value (G₁),
▪ determining a differential image (54) between the first and the second image (51, 53) of the target object (13),
▪ identifying a received beam (55) reflected and/or scattered by the target object (13) and a surrounding region (56) in the differential image (54) of the target object (13),
▪ determining a second contrast (K₂) between the brightest image region (P₂, ₘᵢₙ) of the surrounding region (56) and the darkest image region (P_{2, max}) of the received beam (55),
▪ comparing the second contrast (K₂) with a second limit value (G₂) stored in the control device (23),
▪ determining a centroid (57) of the received beam (55) and the centroid coordinates (X_{S}, Y_{S}), if the second contrast (K₂) does not fall below the second limit value (G₂) and
▪ storing the centroid coordinates (Xs, Ys) of the received beam (55) as new position (Xp, Yp) of the target axis (39) in the control device (23).

2. Method according to claim 1, **characterised in that** the method is stopped after the comparison of the first contrast (K₁) with the first limit value (G₁), if the first contrast (K₁) exceeds the first limit value (G₁).

3. Method according to claim 1, **characterised in that** the method is stopped after the comparison of the second contrast (K₂) with the second limit value (G₂), if the second contrast (K₂) falls below the second limit value (G₂).

4. Method according to claim 1, **characterised by** the additional steps:
▪ measuring the distance to the target object (13) and
▪ comparing the measured distance (d) with a distance range (D₁, D₂) stored in the control device (23).

5. Method according to claim 4, **characterised in that** the method is stopped, if the measured distance (d) to the target object (13) lies outside the distance range (D₁, D₂).

6. Measuring instrument (10; 20) for carrying out a method according to one of claims 1 to 5, comprising:
▪ a laser measuring device (21) that emits a laser beam (11) along a measuring axis (38),
▪ a camera device (22) having a target axis (39) and
▪ a control device (23) having a control element (35) for controlling the laser measuring device (21) and the camera device (22), an evaluation element (36) and a storage element (37).

7. Measuring instrument according to claim 6, **characterised in that** the camera device (22) has a camera lens system (34) that can be switched between a first and a second focal length (f₁, f₂), a first position (X_{P1}, Y_{P1}) of the target axis (39) being stored in the storage element (37) for the first focal length (f₁) of the camera lens system (34) and a second position (X_{P2}, Y_{P2}) of the target axis (39) being stored in the storage element (37) for the second focal length (f₂) of the camera lens system (34).

8. Measuring instrument according to claim 7, **characterised in that** the camera lens system (34) can be switched between more than two focal lengths, a position of the target axis (39) being stored in the storage element (37) for each focal length of the camera lens system (34).

## Revendications

1. Procédé pour étalonner un appareil de mesure (10), comportant un dispositif de mesure à laser (21) qui émet un faisceau laser (11) le long d'un axe de mesure (38), un dispositif de prise de vues (22) avec un axe de cible (39) et un dispositif de contrôle (23), comportant les étapes consistant à :
▪ capturer une première image (51) d'un objet cible (13) au moyen du dispositif de prise de vues (22) lorsque le faisceau laser (11) est désactivé,
▪ définir une section d'image (52) autour de la position (X_{P}, Y_{P}) de l'axe cible (39) mémorisée dans le dispositif de contrôle (23) dans la première image de l'objet cible (13),
▪ déterminer un premier contraste (K₁) entre la zone d'image la plus foncée (P_{1,min}) de la section d'image (52) et la zone d'image la plus claire (P_{1,max}) de la section d'image (52),
▪ comparer le premier contraste (K₁) à une première valeur limite (G₁) mémorisée dans le dispositif de contrôle (23),
▪ capturer une seconde image (53) de l'objet cible (13) au moyen du dispositif de prise de vues (22) lorsque le faisceau laser (11) est activé, lorsque le premier contraste (K₁) ne dépasse pas la première valeur limite (G₁),
▪ déterminer une image différentielle (54) entre la première image et la seconde image (51, 53) de l'objet cible (13),
▪ identifier un faisceau de réception (55) réfléchi et/ou diffusé par l'objet cible (13) et une zone environnante (56) dans l'image différentielle (54) de l'objet cible (13),
▪ déterminer un second contraste (K₂) entre la zone d'image la plus claire (P_{2,min}) de la zone environnante (56) et la zone d'image la plus sombre (P_{2,max}) du faisceau de réception (55),
▪ comparer le second contraste (K₂) avec une seconde valeur limite (G₂) mémorisée dans le dispositif de contrôle (23),
▪ déterminer un centre de gravité (57) du faisceau de réception (55) et les coordonnées du centre de gravité (Xs, Ys) lorsque le second contraste (K₂) ne dépasse pas la seconde valeur limite (G₂), et
▪ mémoriser les coordonnées du centre de gravité (Xs, Ys) du faisceau de réception (55) comme nouvelle position (Xp, Yp) de l'axe cible (39) dans le dispositif de contrôle (23).

2. Procédé selon la revendication 1, **caractérisé en ce que** le procédé est interrompu après la comparaison du premier contraste (K₁) avec la première valeur limite (G₁) lorsque le premier contraste (K₁) dépasse la première valeur limite (G₁).

3. Procédé selon la revendication 1, **caractérisé en ce que** le procédé est interrompu après la comparaison du second contraste (K₂) avec la seconde valeur limite (G₂) lorsque le second contraste (K₂) dépasse la seconde valeur limite (G₂).

4. Procédé selon la revendication 1, **caractérisé par** les étapes supplémentaires consistant à :
▪ réaliser une mesure de distance jusqu'à l'objet cible (13) et
▪ comparer la distance (d) mesurée à une plage de distances (D₁, D₂) mémorisée dans le dispositif de commande (23) .

5. Procédé selon la revendication 4, **caractérisé en ce que** le procédé est interrompu lorsque la distance (d) mesurée jusqu'à l'objet cible (13) est en dehors de la plage de distances (D₁, D₂) .

6. Appareil de mesure (10 ; 20) destiné à mettre en oeuvre un procédé selon l'une des revendications 1 à 5, comportant :
▪ un dispositif de mesure à laser (21) qui émet un faisceau laser (11) le long d'un axe de mesure (38),
▪ un dispositif de prise de vues (22) avec un axe cible (39) et
▪ un dispositif de contrôle (23) avec un élément de commande (35) pour commander le dispositif à laser (21) et le dispositif de prise de vues (22), un élément d'évaluation (36) et un élément de mémoire (37).

7. Appareil de mesure selon la revendication 6, **caractérisé en ce que** ledit dispositif de prise de vues (22) comporte une optique de prise de vues (34) qui peut être commutée entre une première et une seconde distance focale (f₁, f₂), dans lequel une première position (X_{P1}, Y_{P1}) de l'axe cible (39) est mémorisée dans l'élément de mémoire (37) pour la première distance focale (f₁) de l'optique de prise de vues (34), et une seconde position (X_{P2}, Y_{P2}) de l'axe cible (39) est mémorisée pour chaque seconde distance focale (f₂) de l'optique de prise de vues (34).

8. Appareil de mesure selon la revendication 7, **caractérisé en ce que** l'optique de prise de vues (34) peut être commutée entre plus de deux largeurs focales, dans lequel une position de l'axe cible (39) est mémorisée dans l'élément de mémoire (37) pour chaque distance focale de l'optique de prise de vues (34).
